# EUROPÄISCHE PATENTSCHRIFT

(11) **EP 3 251 485 B1**
(45) Veröffentlichungstag und Bekanntmachung des Hinweises auf die Patenterteilung: **22.04.2020**
(21) Anmeldenummer: 17170198.0
(22) Anmeldetag: 09.05.2017
(51) Int. Cl.: A01B 79/00

(54) **SELBSTFAHRENDE LANDWIRTSCHAFTLICHE ARBEITSMASCHINE MIT EINER ANORDNUNG ZUR ÜBERWACHUNG UND/ODER KONTROLLE DES FAHRZUSTANDES UND VERFAHREN**
SELF-PROPELLED AGRICULTURAL WORKING MACHINE WITH A SYSTEM FOR MONITORING AND/OR CONTROLLING THE OPERATING STATE AND METHOD
MACHINE DE TRAVAIL AGRICOLE AUTOMOTRICE AVEC UN SYSTÈME DE SURVEILLANCE ET/OU DE CONTRÔLE DE L'ÉTAT DE MARCHE ET PROCÉDÉ

(30) Priorität: 30.05.2016 DE 102016209270
(43) Veröffentlichungstag der Anmeldung: 06.12.2017
(73) Patentinhaber: Deere & Company, Moline, IL 61265 (US)
(72) Erfinder: Gresch, Valentin, 68163 Mannheim (DE); Kremmer Dr., Martin, 68163 Mannheim (DE)
(74) Vertreter: Holst, Sönke

(56) Entgegenhaltungen:
- EP-A2- 2 042 276
- EP-A2- 2 524 586
- DE-A1-102007 032 310
- DE-A1-102013 013 243
- DE-B3- 10 250 694
- US-A1- 2006 142 936

## Beschreibung

Die Erfindung betrifft eine selbstfahrende landwirtschaftliche Arbeitsmaschine mit einer Anordnung zur Überwachung und/oder Kontrolle des Fahrzustandes der Arbeitsmaschine sowie ein entsprechendes Verfahren.

### Stand der Technik

In der Landwirtschaft werden selbstfahrende Ackerschlepper für unterschiedliche Aufgaben verwendet, beispielsweise für die Bodenbearbeitung, zum Ausbringen von Material, wie Saatgut oder Dünger, auf einem Feld, für Erntearbeiten oder für Transportarbeiten. Demnach sind unterschiedliche Geräte an den Ackerschlepper anzukoppeln, wie Pflüge, Sämaschinen, Düngerstreuer, Ballenpressen, Mähgeräte, angebaute Feldhäcksler oder Transportanhänger. Die Ackerschlepper sind daher mit einer oder mehreren Schnittstellen ausgestattet, an denen unterschiedliche Geräte befestigt werden können. Derartige Schnittstellen können eine Anhängekupplung zum Anhängen z.B. eines Transportanhängers oder einer Ballenpresse, einen hinteren Kraftheber (i.A. eine Dreipunktkupplung) an der Rückseite des Schleppers und/oder einen vorderen Kraftheber (i.A. eine Dreipunktkupplung) an der Vorderseite des Ackerschleppers umfassen, die jeweils zur Anbringung nicht mit einer Deichsel angekoppelter Geräte dienen, z.B. von Mähgeräten, Feldspritzen, Feldhäckslern, Düngerstreuern, Sämaschinen oder Pflügen. Neben Ackerschleppern finden auch andere Typen von selbstfahrenden Arbeitsfahrzeugen in der Landwirtschaft Verwendung, wie selbstfahrende Erntemaschinen (z.B. Mähdrescher oder Feldhäcksler) oder Fahrzeuge zur Bewegung von Lasten (z.B. Rad- oder Teleskoplader).

Während verschiedene Anordnungen zur selbsttätigen Regelung der Fahrgeschwindigkeit und Lenkbewegung von landwirtschaftlichen Arbeitsmaschinen auf dem Feld beschrieben wurden, die zur Geschwindigkeitsregelung beispielsweise auf Messungen von Ernteguteigenschaften oder Zugkraftmessungen bei der Bodenbearbeitung und zur Lenkung beispielsweise auf optischer Detektion eines aufzunehmenden Schwades oder einer Fahrspur oder auf einer Karte des Feldes in Verbindung mit einer Positionserfassung mittels eines satellitenbasierten Positionserfassungssystems basieren können, erfolgt die Geschwindigkeitsvorgabe und Lenkung einer Arbeitsmaschine bei Fahrten auf einer Straße bisher durch den Fahrer der Arbeitsmaschine. Das kann bei längeren Arbeitstagen relativ ermüdend werden und ist bei schwer beladenen Anhängern oder mit großen und schweren Geräten ausgestatteten Arbeitsmaschinen oft auch schwierig und gefährlich, insbesondere für wenig erfahrenes Aushilfspersonal.

Aus dem Automotive-Bereich ist eine Reihe an Anordnungen bekannt, die zur selbstständigen Abstandsregelung von Fahrzeugen dienen, wobei man auf Sensoren zur Erkennung des Abstands und der Geschwindigkeit eines vorausschauenden Fahrzeugs (DE 10 2013 013 243 A1) und/oder eine Kommunikation von Fahrzeugen untereinander zurückgreift (DE 40 35 501 A1). Da bei der Geschwindigkeitssteuerung des Fahrzeugs, insbesondere eines Lastkraftwagens mit oder ohne Anhänger oder Personenkraftwagens mit Anhänger oder Dachgepäckträger auch dessen Beladung zu berücksichtigen ist, die einen gewissen Einfluss auf die Fahrdynamik des Fahrzeugs hat, wurde bereits vorgeschlagen, Daten dieser Beladung durch den Fahrer einzugeben oder durch Sensoren selbsttätig zu erfassen (DE 10 2013 013 243 A1, DE 20 2011 100 493 U1, DE 20 2011 100 844 U1, DE 10 2011 012 407 A1). Die Anordnung zur Vorgabe der Fahrgeschwindigkeit des Fahrzeugs erhält somit einerseits Daten zum Anhänger an sich, wie dessen Leergewicht, wie auch sensorisch erfasste oder manuell eingegebene Daten zur Beladung und berücksichtigt diese bei der Geschwindigkeitskontrolle.

In der DE 10 2007 032 310 A1 wird eine selbstfahrende, landwirtschaftliche Arbeitsmaschine beschrieben, deren vom Fahrer kontrolliertes Geschwindigkeitseingabemittel (Gaspedal) von einer Kontrolleinrichtung durch einen Aktor mit einer veränderbaren Kraft beaufschlagt wird, die den Fahrer veranlassen soll, mit einer unter Ökonomie- und Sicherheitsgesichtspunkten angemessenen Geschwindigkeit zu fahren. Versucht er demnach, schneller als angemessen zu fahren, wird sich das Gaspedal nur gegen einen relativ hohen Widerstand nach unten bewegen lassen. Hierzu wird mit einem Sensor beispielsweise eine auf die Arbeitsmaschine wirkende Kraft eines Anhängers oder eines Arbeitsgeräts oder das Giermoment der Arbeitsmaschine bei einer Kurvenfahrt erfasst und mit einem Grenzwert verglichen.

Schließlich wurde vorgeschlagen, landwirtschaftliche Anbaugeräte anhand daran angebrachter Identifikationstafeln, auf denen maschinell auslesbare Informationen zur Identifizierung des Anbaugeräts angebracht sind, mittels einer Kamera und einer Bildverarbeitungssoftware zu identifizieren, um Wartungs- und Reparaturarbeiten zu erleichtern (DE 10 2013 109 444 A1) oder Einstellungen der Arbeitsmaschine durchführen zu können, wozu neben Betriebsparametern des Anbaugeräts wie Zapfwellendrehzahl auch dessen physische Größen, wie Schwerpunktlage, anhand des identifizierten Arbeitsgeräts (DE 10 2012 109 210 A1) ermittelt werden können, wobei bei Bedarf zusätzliche Informationen anhand eines in der Identifikationstafel enthaltenen Verweises auf eine Internetadresse heruntergeladen werden können. Derartige Informationen können auch in einem Speicherelement bereitgestellt sein, das physisch mit dem Anbaugerät gekoppelt ist (DE 102 30 474 A1).

### Aufgabe

Bei den aus dem Automotive-Bereich bekannten Abstandsregelungen werden somit die Beladung des Fahrzeugs und ggf. eines Anhängers bei der selbsttätigen Abstandsregelung berücksichtigt, um die sich abhängig von der Beladung ändernden Bremswege und das sich ändernde Fahrverhalten des Fahrzeugs beispielsweise in Kurven in Betracht zu ziehen. Die Position des Anhängers gegenüber dem Erdboden und somit die Lage seines Schwerpunkts, die für die Erkennung des Fahrzustandes und eine optimale Geschwindigkeitskontrolle in Kurven und beim Bremsen benötigt wird, kann als bekannt angenommen werden, da die Räder des Anhängers auf dem Erdboden rollen. Analoges gilt auch für Dachgepäckträger auf einem Personenkraftwagen, deren Position ebenfalls fest vorgegeben und somit bekannt ist.

Bei selbstfahrenden, landwirtschaftlichen Arbeitsmaschinen sind die mitgeführten Geräte jedoch nicht unbedingt an der Anhängekupplung angebracht, sondern in vielen Fällen an einer der oben erwähnten, höhenverstellbaren Schnittstelle befestigt. Die aktuelle Stellung der Schnittstelle beeinflusst auch die Lage des Schwerpunkts der Kombination aus Gerät und Arbeitsmaschine, die bei einer genaueren Erkennung des Fahrzustandes zu berücksichtigen wäre. Eine Berücksichtigung der Position des angebauten Geräts oder der Schnittstelle bei der Abstandsregelung ist jedoch im zitierten Stand der Technik nicht vorgesehen.

Im Stand der Technik nach DE 10 2007 032 310 A1 wird auf eine ausschließlich sensorische Erfassung der durch das Gerät auf die Arbeitsmaschine ausgeübten Kräfte zurückgegriffen, um bei sicherheitskritischen Zuständen über das Pedal eine Verringerung der Geschwindigkeit zu erzielen. Hier wird demnach nur die Auswirkung des Geräts auf die Arbeitsmaschine erfasst, was in gewissen Fällen zu spät sein kann, um die Gefahr zu vermeiden: wenn das Giermoment bei einer Kurvenfahrt bereits einen Grenzwert überschritten hat, kann es bereits zu spät sein, um das Fahrzeug wieder in einen unkritischen Zustand zu bringen.

Der vorliegenden Erfindung liegt demnach die Aufgabe zu Grunde, eine selbstfahrende landwirtschaftliche Arbeitsmaschine mit einer Anordnung zur Überwachung und/oder Kontrolle des Fahrzustandes der Arbeitsmaschine und ein entsprechendes Verfahren zu schaffen, bei der die erwähnten Nachteile des Standes der Technik nicht oder in vermindertem Maße auftreten.

### Lösung

Dieses Problem wird erfindungsgemäß durch die Lehre der Patentansprüche 1 und 9 gelöst, wobei in den weiteren Patentansprüchen Merkmale aufgeführt sind, die die Lösung in vorteilhafter Weise weiterentwickeln.

Es werden eine selbstfahrende landwirtschaftliche Arbeitsmaschine mit einer Anordnung zur Überwachung und/oder Kontrolle des Fahrzustandes der Arbeitsmaschine, die eine positionsveränderbare Schnittstelle zur Anbringung eines Geräts umfasst, beschrieben, und ein entsprechendes Verfahren. Die Anordnung ist mit einer Steuereinrichtung ausgerüstet, der fahrzeugspezifische Daten hinsichtlich physischer Eigenschaften der Arbeitsmaschine, bewegungszustandsspezifische Daten hinsichtlich der Bewegung der Arbeitsmaschine gegenüber ihrer Umgebung, ein Positionssignal hinsichtlich der Position der Schnittstelle und Gerätedaten hinsichtlich physischer Eigenschaften eines an der Schnittstelle angebrachten Geräts zuführbar sind und die betreibbar ist, unter Berücksichtigung der fahrzeugspezifischen Daten, der bewegungszustandsspezifischen Daten, des Positionssignals und der Gerätedaten wenigstens eine Information hinsichtlich des Fahrzustands der Arbeitsmaschine zu evaluieren. Optional können der Steuerung auch Umgebungssignale hinsichtlich der Umgebung der Arbeitsmaschine zugeführt werden.

Demnach wird eine Anordnung beschrieben, die beim Fahren auf einer öffentlichen Straße und/oder beim Arbeiten auf einem Feld den Fahrzustand der Arbeitsmaschine überwachen und optional kontrollieren kann. Gegenüber ähnlichen, aus dem reinen Straßenfahrzeugbau (Automotive-Bereich) bekannten Kontrolleinrichtungen für Fahrzeuge, bei denen eine Steuereinrichtung in an sich bekannter Weise die Geschwindigkeit des Fahrzeugs selbsttätig beeinflusst oder regelt, insbesondere dessen Abstand zum vorausfahrenden Fahrzeug oder es bei kritischen, möglicherweise zu Unfällen führenden Situationen selbsttätig abbremst oder es selbsttätig entlang einer Straße lenkt, und somit fahrzeugspezifische Daten hinsichtlich physischer Eigenschaften der Arbeitsmaschine sowie bewegungszustandsspezifische Daten hinsichtlich der Bewegung der Arbeitsmaschine gegenüber ihrer Umgebung und optional Umgebungssignale hinsichtlich der Umgebung der Arbeitsmaschine, berücksichtigt, werden gemäß der vorliegenden Erfindung zusätzlich ein Positionssignal hinsichtlich der veränderbaren Position der Schnittstelle und Gerätedaten hinsichtlich physischer Eigenschaften eines an der Schnittstelle angebrachten Geräts berücksichtigt. Auf diese Weise ist sichergestellt, dass die Steuereinrichtung die Auswirkungen (insbesondere der Masse und der Lage des Schwerpunktes) des angebrachten Geräts auf das Fahrverhalten der Arbeitsmaschine mit berücksichtigen kann. Wird demnach ein schweres Gerät in einer relativ hohen Lage transportiert, kann das Beschleunigungs-, und Brems und Lenkverhalten der Arbeitsmaschine sehr nachteilig beeinflusst werden. In derartigen Fällen wird die Steuereinrichtung selbsttätig dafür sorgen, dass größere Abstände zum vorausfahrenden Fahrzeug eingehalten und Kurven weniger schnell durchfahren werden. Diese Vorgehensweise beruht nicht oder zumindest nicht ausschließlich auf Sensordaten zum Fahrverhalten der Arbeitsmaschine, sondern auf dem erwähnten Positionssignal hinsichtlich der veränderbaren Position der Schnittstelle und den Gerätedaten hinsichtlich physischer Eigenschaften eines an der Schnittstelle angebrachten Geräts. Beide Informationen liegen somit bereits bei Fahrtantritt vor und werden nicht erst dann indirekt durch Sensorsignale zur Erfassung von Beschleunigungswerten o. dgl. ermittelt, wenn eine kritische Situation eingetreten ist, die unter Umständen schon außer Kontrolle geraten ist.

Die Steuereinrichtung ist programmiert, anhand des evaluierten Fahrzustands im Sinne der Fahrsicherheit und/oder der Kraftstoffökonomie und/oder des Fahrerkomforts und/oder der Einhaltung einer vorgegebenen Geschwindigkeit und/oder eines vorgegebenen Abstands zu einem vorausfahrenden Fahrzeug optimierte Lenk- und/oder Geschwindigkeitssignale zur manuellen oder automatischen Kontrolle der Arbeitsmaschine auszugeben.

Die Umgebungssignale können sich auf eines oder mehrere der folgenden Merkmale der Umgebung beziehen: den Abstand eines vorausfahrenden Fahrzeugs, die (an Bord des vorausfahrenden Fahrzeugs oder der Arbeitsmaschine) gemessene oder erwartete (d.h. anhand einer erkannten Art des Fahrzeugs abgeschätzte) Geschwindigkeit eines vorausfahrenden Fahrzeugs, den Abstand eines nachfolgenden oder nebenher fahrenden Fahrzeugs, die (an Bord des anderen Fahrzeugs oder der Arbeitsmaschine) gemessene oder erwartete (d.h. anhand einer erkannten Art des Fahrzeugs abgeschätzte) Geschwindigkeit eines nachfolgenden oder nebenher fahrenden (und unter Umständen überholenden und vor der Arbeitsmaschine einscherenden) Fahrzeugs, die Sichtweite, einen gemessenen oder erwarteten Reibwert des Bodens unter dem Fahrzeug, die Breite einer befahrenen Fahrbahn, die Neigung einer befahrenen Fahrbahn nach oben oder unten (Steigung oder Gefälle), die auf einer befahrenen Straße geltende Höchstgeschwindigkeit, und den Kurvenradius einer befahrenen Fahrbahn. Diese Umgebungssignale können mittels eines geeigneten des Umgebungssensors ermittelt oder anhand der Position des Fahrzeugs aus einer Karte ausgelesen oder von anderen Fahrzeugen auf das Fahrzeug übertragen werden. So kann über GPS die Position des Fahrzeuges ermittelt werden, diese mit einer Karte verglichen werden, um den Kurvenradius der nächsten Kurve zu berechnen und mittels dieser Information die Geschwindigkeit, wenn notwendig reduziert werden.

Die fahrzeugspezifische Daten können sich auf eine oder mehrere der folgenden Merkmale der Arbeitsmaschine beziehen: Abmessungen, Masse, Geometrie der Lenkung, Massenverteilung, Lage des Schwerpunkts, Breite der Reifen, Durchmesser der Reifen, Motorisierung, zulässige Höchstgeschwindigkeit der Arbeitsmaschine mit angebautem Gerät, Eigenschaften einer evtl. vorhandenen Federung der Arbeitsmaschine und/oder des Geräts, die Ballastierung der Arbeitsmaschine (d.h. Masse des Ballastgewichts und dessen Einbauort) und Eigenschaften von Bremsen der Arbeitsmaschine.

Die bewegungszustandsspezifischen Daten können sich auf eine oder mehrere der folgenden Merkmale der Arbeitsmaschine beziehen: aktuelle Geschwindigkeit, aktuelle Beschleunigung, aktueller Lenkwinkel.

Das Positionssignal kann sich auf die vertikale und/oder seitliche Position der Schnittstelle und/oder die Lage der Schnittstelle an der Arbeitsmaschine beziehen, z.B. ob das Gerät an einer vorderen oder hinteren Schnittstelle angebracht ist. Auch können Einstellungen und/oder physische Größen der Schnittstelle mit berücksichtigt werden. Bei einem Dreipunktkraftheber wären dies beispielsweise: Hubspindellänge, Länge des Oberlenkers (insbesondere bei hydraulisch ausgeführten Oberlenkern), Masthöhe, Anbaupunkt des Oberlenkers, Hubspindelbohrung.

Die Gerätedaten können sich auf eine oder mehrere der folgenden Merkmale des Geräts beziehen: Masse, Abmessungen, Massenverteilung und Lage des Schwerpunkts gegenüber der Schnittstelle. Hierbei wird eine Nutzlast des Geräts, die beispielsweise in einem Tank für Spitzmittel oder einem Behälter für Saatgut oder Dünger abgelegt sein kann, berücksichtigt.

Die Gerätedaten können in einem Speicherelement des Geräts abgelegt und mittels eines Busses an die Steuereinrichtung übertragbar oder durch einen Bediener in die Steuereinrichtung eingebbar oder anhand einer Geräteidentifikation von einer beabstandeten Stelle abfragbar oder mittels eines Sensors erfassbar sein.

Die Arbeitsmaschine ist insbesondere ein Ackerschlepper, die eine positionsveränderliche (Dreipunkt-) Schnittstelle in Form eines Front- und/oder Heckkrafthebers zum Anbau eines beliebigen Geräts aufweist. Es kann sich jedoch auch um eine selbstfahrende Erntemaschine in Form eines Mähdreschers oder Feldhäckslers handeln, die eine positionsveränderliche Schnittstelle in Form eines Schrägförderers oder Einzugskanals umfasst, an welcher ein Gerät in Form eines Erntevorsatzes angebracht werden kann.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer selbstfahrenden landwirtschaftlichen Arbeitsmaschine mit einer höhenverstellbaren Schnittstelle und einem daran angebrachten Gerät, und
- Fig. 2: ein Flussdiagramm, nach dem die Steuereinrichtung die benötigten physischen Eigenschaften des Geräts ermittelt.

### Arbeitsmaschine und Gerät

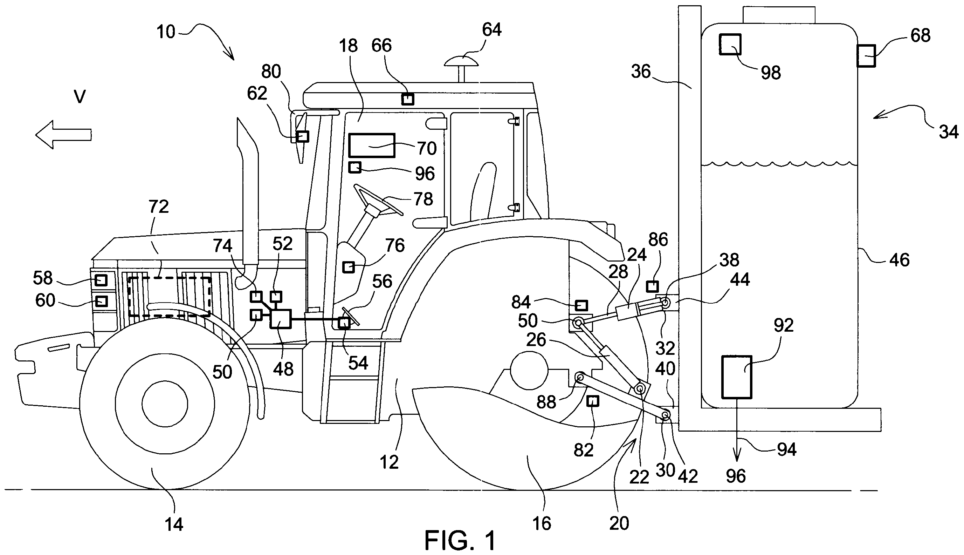

In der Figur 1 ist eine selbstfahrende landwirtschaftliche Arbeitsmaschine 10 in Form eines landwirtschaftlichen Ackerschleppers dargestellt. Die Arbeitsmaschine 10 baut sich auf einem Rahmen 12 auf und stützt sich durch vordere, lenkbare Räder 14 und antreibbare, rückwärtige Räder 16 auf dem Boden ab. Ein Bedienerarbeitsplatz befindet sich in einer Kabine 18.

Am rückwärtigen Ende des Rahmens 12 ist eine hintere, höhenverstellbare Schnittstelle 20 in Form einer Dreipunktkupplung angeordnet, die sich aus zwei nebeneinander angeordneten, unteren Lenkern 22 und einem oberen Lenker 24 zusammensetzt. Die unteren Lenker 22 sind durch Aktoren 26 in Form von Hydraulikzylindern höhenverstellbar. Der obere Lenker 24 ist durch einen Aktor 28 in Form eines Hydraulikzylinders längenveränderbar. Durch Verstellung der Aktoren 26 können die rückwärtigen Enden der unteren Lenker 22 in eine Position verbracht werden, in der sie mit einem beliebigen Gerät 34 gekoppelt werden können. Am rückwärtigen Ende der unteren Lenker 22 sind in an sich bekannter Weise Koppelpunkte 30 in Form von sich nach oben erstreckenden Fanghaken (oder beliebiger anderer Koppelpunkte, z. B. Koppelaugen, wie sie in der DIN ISO 730-1 Landmaschinen und Traktoren - Heck-Dreipunktanbau - Teil 1: Kategorien 1, 2, 3 und 4 beschrieben werden) angeordnet, während am rückwärtigen Ende des oberen Lenkers 24 ein ebenfalls konventioneller Oberlenker-Koppelpunkt 32 vorgesehen ist.

Das Gerät 34 umfasst ein Gestell 36, das durch untere Laschen 40 und Bolzen 42 an den Unterlenker-Kopplungspunkten 30 der Unterlenker 22 und durch ein oberes Halterungselement 44 und einen Bolzen 38 am Oberlenker-Koppelpunkt 32 befestigt ist. Bei dem Gerät 34 handelt es sich beim gezeigten Beispiel um eine Feldspritze mit einem Tank 46 für die Spritzflüssigkeit und einem nicht gezeigten Spritzgestänge, die am Gestell 36 befestigt sind.

### Anordnung zur Überwachung und/oder Kontrolle des Fahrzustandes

Die Arbeitsmaschine 10 umfasst eine elektronische Steuereinrichtung 48, die unter anderem dazu dient, den Fahrzustand der Arbeitsmaschine 10 zu überwachen. Die Steuereinrichtung 48 umfasst einen oder mehrere Prozessoren und einen Speicher für Programme und Daten. Die Steuereinrichtung 48 kann als reines Überwachungssystem ausgeführt sein und bei unter Sicherheits- und/oder Kraftstoffverbrauchsgesichtspunkten ungünstigen Fahrzuständen dem Bediener eine über eine Bedienerschnittstelle 70 (oder über das Pedal 56, vgl. DE 10 2007 032 310 A1) einen Hinweis geben, die Geschwindigkeit zu ändern, oder sie kann direkt in das Fahrmanagement der Arbeitsmaschine 10 eingreifen, indem sie die Geschwindigkeit und/oder den Lenkwinkel anpasst.

Die Steuereinrichtung 48 ist daher mit einer Motorsteuerung 50 verbunden, welche die Kraftstoff- und/oder Luftzufuhr zu einem die Räder 16 (und ggf. 14) über einen mit einem Getriebe ausgestatteten Antriebsstrang und ggf. eine nicht gezeigte Zapfwelle antreibenden Verbrennungsmotor 72 und somit dessen Drehzahl und Leistung kontrolliert. Auch ist die Steuereinrichtung 48 mit einer Geschwindigkeitskontrolleinrichtung 52 verbunden, welche die Vortriebsgeschwindigkeit der Arbeitsmaschine 10 durch entsprechende Ansteuerung des Antriebsstrangs der Räder 16 und ggf. 14 und den Rädern 14, 16 zugeordnete Bremsen kontrolliert. Die Steuereinrichtung 48 kann auch eine Lenkeinrichtung 74 zur Kontrolle des Lenkwinkels der Räder 14 steuern.

Die Steuereinrichtung 48 empfängt im Fahrbetrieb auf einer Straße oder auf einem Feld von einem Geschwindigkeitsvorgabesignalsensor 54 Signale hinsichtlich der Position eines Gaspedals 56 und kontrolliert im Normalbetrieb die Vortriebsgeschwindigkeit der Arbeitsmaschine 10 anhand der Signale des Geschwindigkeitsvorgabesignalsensors 54, indem sie die Motorsteuerung 50 und die Geschwindigkeitskontrolleinrichtung 52 derart ansteuert, das eine vom Bediener über das Gaspedal 56 (oder von Hand betätigte Geschwindigkeitseingabemittel) vorgegebene Geschwindigkeit eingehalten wird. Die aktuelle Geschwindigkeit kann dazu über an sich bekannte Sensoren zur Ermittlung der Drehzahl der Räder 14, 16 und/oder der Geschwindigkeit der Arbeitsmaschine 10 über dem Boden (Radarsensor und/oder Positionsbestimmungseinrichtung 64) erfasst werden. Analog ist die Steuereinrichtung 48 mit einem Lenkwinkelvorgabesensor 76 verbunden, der die Position eines Lenkrads 78 erfasst und kontrolliert die Lenkeinrichtung 74 im Sinne eines Einhaltens eines vom Bediener vorgegebenen, gewünschten Lenkwinkels, wozu auf an sich bekannte Sensoren zur Erfassung der Stellung der Räder 14 um die Hochachse als Rückkopplungswert zurückgegriffen wird.

### Erfassen der Umgebung

Die Arbeitsmaschine 10 ist mit einer Reihe an Sensoren zur Erfassung der Umgebung versehen. Eine vordere Kamera 58 blickt auf den Raum an der Vorderseite der Arbeitsmaschine 10, während eine nach hinten blickende Kamera 62 an einem Rückspiegel 80 angebracht ist. Es kann eine einzige oder mehrere Mono- oder Stereokameras Verwendung finden, wobei es letztere eine dreidimensionale Erfassung der Umgebung ermöglichen. Die Kameras 58, 62 sind jeweils mit Bildverarbeitungssystemen verbunden. Ein Radar- oder Ultraschall- oder Laserabtastsensor 60 blickt auf den Raum an der Vorderseite der Arbeitsmaschine 10. Ein weiterer Radar- oder Ultraschall- oder Laserabtastsensor 68 ist am Gerät angebracht und blickt nach hinten. Die Bildverarbeitungssysteme der Kameras 58, 62 und die Radar- oder Ultraschall- oder Laserabtastsensoren 62, 68 sind mit der Steuereinrichtung 48 verbunden, die zudem mit einer Sende- und Empfangseinrichtung 66 zur Kommunikation mit in der Umgebung der Arbeitsmaschine 10 fahrenden Fahrzeugen und mit der Positionsbestimmungseinrichtung 64 zum Empfang von Signalen von Satelliten eines Positionsbestimmungssystems (z.B. GPS) verbunden ist.

### Erfassen der Position der Schnittstelle

Ein erster Positionssensor 82 erfasst die Position des Unterlenkers 22, d.h. dessen Drehwinkel um seine vordere, horizontal und quer zur Vorwärtsrichtung V der Arbeitsmaschine 10 angeordnete Drehachse 88. Ein zweiter Positionssensor 84 erfasst die Position des Oberlenkers 28, d.h. dessen Drehwinkel um seine vordere, horizontal und quer zur Vorwärtsrichtung V der Arbeitsmaschine 10 angeordnete Drehachse 90. Ein dritter Positionssensor 86 erfasst die Position des Kolbens des Zylinders 24, der die Länge des Oberlenkers 28 definiert. Anhand der Signale dieser Positionssensoren 82, 84, 86 berechnet die Steuereinrichtung 48 die Position und Orientierung eines Referenzpunktes der Schnittstelle, z.B. am oberen Halterungselement 44.

### Erfassen physischer Eigenschaften des Geräts

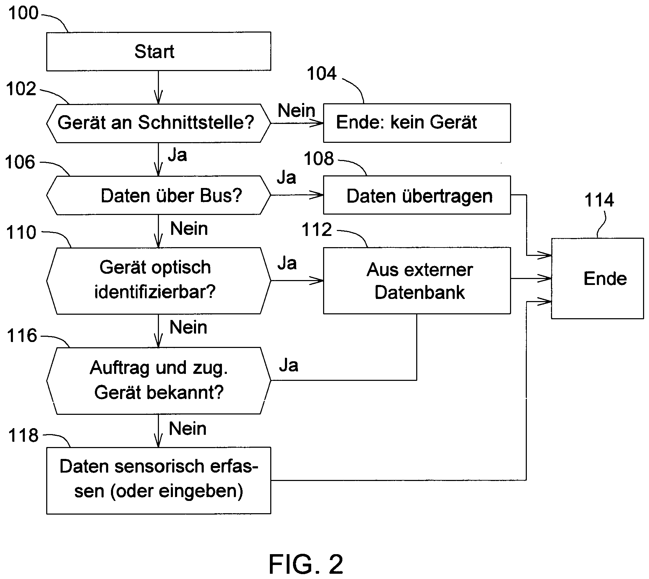

Die Steuereinrichtung 48 benötigt auch Gerätedaten hinsichtlich physischer Eigenschaften des an der Schnittstelle 20 angebrachten Geräts 34. Hierzu wird auf das Flussdiagramm der Figur 2 verwiesen. Nach dem Start, z.B. nach dem Starten des Verbrennungsmotors 72, im Schritt 100 fragt die Steuereinrichtung 48 im Schritt 102 ab, ob ein Gerät 34 an der Schnittstelle 20 montiert ist. Hierzu kann der Druck in einem der Zylinder 24, 26 evaluiert werden, der bei angebrachtem Gerät 34 größer ist als bei fehlendem Gerät 34, oder auf einen Näherungsschalter (nicht gezeigt) an einem der Koppelpunkte 30, 32 oder das Signal von der Kamera 62 zurückgegriffen werden. Ist kein Gerät 34 vorhanden, endet das Verfahren im Schritt 104. Ist die Arbeitsmaschine 10 mit mehreren Schnittstellen 20 ausgestattet, z.B. einer weiteren Schnittstelle (nicht gezeigt) an der Vorderseite der Arbeitsmaschine 10, wird der Schritt 102 für die weitere Schnittstelle wiederholt.

Ist das Ergebnis des Schritts 102 positiv, folgt der Schritt 106, in dem abgefragt wird, ob Daten über das Gerät 34 über ein Bussystem 94 verfügbar sind. Ein derartiges, insbesondere nach der Norm ISO 11783 ausgeführtes Bussystem 94 verbindet eine Gerätesteuerung 92 mit einem virtuellen Terminal 96 der Arbeitsmaschine 10, das mit der Bedienerschnittstelle 70 gekoppelt oder davon unabhängig sein kann, sodass über die Bedienerschnittstelle 70 eine Kontrolle des Geräts 34 möglich ist, indem Bedienereingaben über die Bedienerschnittstelle 70, das virtuelle Terminal 96, das Bussystem 94 an die Gerätesteuerung 92 gegeben werden, welche ihrerseits Aktoren des Geräts 34 ansteuert. Auf analogem Weg werden Sensordaten des Geräts 34 auf die Bedienerschnittstelle 70 übertragen. An das Bussystem 94 ist auch die Steuereinrichtung 48 angeschlossen. Die Gerätesteuerung 92 umfasst einen Speicher, in dem Daten zum Gerät 34 abgelegt sind, die u.a. auch physische Daten des Geräts 34 umfassen können, wie Abmessungen, Leergewicht, Lage des Schwerpunkts etc. Ein Sensor 98 kann mit der Gerätesteuerung 92 verbunden sein und ihr den Füllstand des Tanks 46 mitteilen.

In dem Fall, dass die erwähnten Daten über das Bussystem 94 verfügbar sind, folgt auf den Schritt 106 der Schritt 108, in dem die Steuereinrichtung 48 die erwähnten Daten hinsichtlich der Abmessungen, des Leergewichts, der Lage des Schwerpunkts und des Füllstands des Tanks 46 von der Gerätesteuerung 92 abfragt und erhält. Es folgt der Schritt 114, in dem das Verfahren endet.

Ergibt sich im Schritt 106, dass keine oder nicht alle erforderlichen Daten über ein Bussystem 94 erhalten werden können, folgt der Schritt 110, in dem abgefragt wird, ob das Gerät 34 optisch identifizierbar ist. Hierzu wird mittels der Kamera 62 (oder einer anderen Kamera durch den Bediener) ein Foto des Geräts 34 oder eines daran angebrachten Identifikationsmittels, z.B. eines Barcodes oder Typenschilds, gemacht und mit einer Datenbank verglichen, die sich in der Steuereinrichtung 48 oder im Abstand von der Arbeitsmaschine 10 befindet, d.h. das Foto wird elektronisch über die Sende- und Empfangseinrichtung 66 an eine beabstandete Stelle übertragen, wo ein Vergleich mit der Datenbank erfolgt. Ist der Vergleich erfolgreich, folgt der Schritt, in dem die Daten hinsichtlich der Abmessungen, des Leergewichts und der Lage des Schwerpunkts des Geräts 34 aus der Datenbank zurück an die Steuereinrichtung 48 gesandt werden. Es folgt dann ebenfalls der Schritt 114. Im Schritt 110 könnte alternativ oder zusätzlich abgefragt werden, ob das Gerät 34 anhand eines es identifizierenden Speichermittels (z.B. RFID) erkennbar ist und die Daten in der in diesem Absatz beschriebenen Weise ermittelt werden.

Ist das Ergebnis des Schritts 110 negativ, folgt der Schritt 116, in dem abgefragt sind, ob in einer (in der Steuereinrichtung 48 oder extern abgespeicherten) Datenbank Informationen hinsichtlich eines durchzuführenden Auftrags vorliegen (z.B. heute Vormittag das Feld 123 mit der Substanz 3435 düngen), aus denen sich auch Informationen zum Gerät ableiten lassen. Ist das der Fall, folgt der Schritt 112, in dem die Daten hinsichtlich der Abmessungen, des Leergewichts und der Lage des Schwerpunkts des Geräts 34 aus der externen oder internen Datenbank anhand des Auftrags und des zugehörigen Geräts entnommen und an die Steuereinrichtung 48 gegeben werden. Es kann optional auch der Füllstand des Tanks 46 anhand des Auftrags ermittelt werden. Es folgt dann ebenfalls der Schritt 114.

Sollte das Ergebnis des Schritts 116 negativ sein, folgt der Schritt 118, in dem die Daten sensorisch erfasst werden. Hierzu kann bezüglich der Abmessungen des Geräts 34 auf die Signale der Kamera 62 zurückgegriffen werden und hinsichtlich des Gewichts auf Sensoren zur Erfassung des Drucks in den Zylindern 24, 26 und/oder auf ein gemessenes Brems- oder Beschleunigungsverhalten der Arbeitsmaschine 10 mit angebautem Gerät 34. Eine genauere Lage des Schwerpunkts kann durch Fahrversuche und sensorisch erfasste Auswirkungen des Geräts 34 auf das Fahrverhalten der Arbeitsmaschine 10 ermittelt werden, z.B. indem mit einer bestimmten Geschwindigkeit eine Kurve durchfahren und die seitliche Neigung der Arbeitsmaschine 10 gemessen wird. Weiterhin wäre es auch möglich, dass der Fahrer die erwähnten Daten in die Bedienerschnittstelle 70 eingibt, z.B. anhand eines Datenblattes des Geräts 34. Es folgt ebenfalls der Schritt 114.

### Kontrolle des Fahrzustands

Nach dem Durchlaufen des Verfahrens der Figur 2 und der Erfassung der Position der Schnittstelle 20 liegen der Steuereinrichtung 48 hinreichende Informationen über das Gerät 34 vor, die es der Steuereinrichtung 48 ermöglichen, die Auswirkungen des Geräts 34 auf das Fahrverhalten der Arbeitsmaschine 10 zu berechnen und bei der Überwachung des Fahrzustandes der Arbeitsmaschine 10 zu berücksichtigen.

Bei der Überwachung des Fahrzustandes der Arbeitsmaschine 10 greift die Steuereinrichtung 48 auf Folgendes zurück:
(a) Umgebungssignale der Umgebungssensoren (Kameras 58, 62 und Radar- oder Ultraschall- oder Laserabtastsensoren 60, 68) zur Erfassung der Umgebung der Arbeitsmaschine. Diese Umgebungssensoren können Eigenschaften der zu befahrenden Straße wie Kurvenradius, Fahrbahnzustand (nass oder trocken, glatt oder uneben), Geschwindigkeit und Abstand vorausfahrender Fahrzeuge, eventuelle Hindernisse, Verkehrszeichen etc. erkennen. Auch können in der Nähe befindliche Fahrzeuge Daten hinsichtlich ihrer Position und Geschwindigkeit an die Steuereinrichtung 48 übersenden, die sie über die Sende- und Empfangseinrichtung 66 erhält. Anhand der mittels der Positionsbestimmungseinrichtung 64 evaluierten Position der Arbeitsmaschine 10 und einer in der Steuereinrichtung 48 abgespeicherten Karte kann der weitere Straßenverlauf bestimmt werden, der nicht mittels der Kameras 58, 62 und Radar- oder Ultraschall- oder Laserabtastsensoren 60, 68 erfasst werden kann. Anhand der Umgebungssignale kann weiterhin die zulässige Höchstgeschwindigkeit bestimmt werden, beispielsweise anhand von mit der Kamera 58 erkannten Verkehrszeichen und/oder der Positionsbestimmungseinrichtung 64 in Verbindung mit der die Höchstgeschwindigkeit aufzeigenden Karte und/oder in einer Datenbank der Steuereinrichtung 48 oder einer externen Datenbank eingetragenen Daten zur Fahrerlaubnis des jeweiligen Bedieners oder zu einer ihm seitens eines Eigentümers der Arbeitsmaschine zugestandenen Höchstgeschwindigkeit.
(b) fahrzeugspezifische Daten hinsichtlich physischer Eigenschaften der Arbeitsmaschine. Hierbei handelt es sich um physische Daten der Arbeitsmaschine, wie Gewicht der Arbeitsmaschine 10, Lage des Schwerpunkts, Füllstand des Hydrauliköl- und/oder Kraftstofftanks, Lage und Masse eines Ballastgewichts, Motorleistung und Drehmomentkurve des Verbrennungsmotors 72, Daten zum Antriebsstrang, Vorhandensein oder Fehlen eines Vorderradantriebs, Beschleunigungs- und/oder Brems- und/oder Lenkverhaltensdaten etc. Diese Daten sind für die jeweilige Arbeitsmaschine 10 fest vorgegeben oder werden mittels eines geeigneten Sensors erfasst oder durch den Bediener über die Bedienerschnittstelle 70 in die Steuereinrichtung 48 eingegeben und in dem Speicher der Steuereinrichtung 48 abgelegt.
(c) bewegungszustandsspezifische Daten hinsichtlich der Bewegung der Arbeitsmaschine gegenüber ihrer Umgebung, wie Geschwindigkeit und/oder Lenkwinkel und/oder Gierrate und/oder Beschleunigung(en). Hierzu dienen entsprechende, an sich bekannte Sensoren der Arbeitsmaschine 10. Mittels einer (Trägheits-) Messeinheit können z.B.: Beschleunigungen und Drehraten in alle drei Raumrichtungen gemessen werden.
(d) das beschriebene Positionssignal hinsichtlich der Position der Schnittstelle 20 gegenüber der Arbeitsmaschine 10.
(e) und Gerätedaten hinsichtlich physischer Eigenschaften des an der Schnittstelle angebrachten Geräts 34, wie sie oben bezüglich der Figur 2 beschrieben wurden.

Die Steuereinrichtung 48 kann, wie oben beschrieben, eine reine Überwachung des Fahrzustandes der Arbeitsmaschine 10 durchführen. Bei einer derartigen Ausführungsform evaluiert die Steuereinrichtung 48 anhand der Daten (a) bis (e), ob eine gefahrenträchtige Situation absehbar ist und gibt in einem derartigen Fall über die Bedienerschnittstelle 70 ein Warnsignal an den Bediener der Arbeitsmaschine 10 ab, um ihn zur Änderung der Fahrweise zu bewegen, oder sie greift in einem derartigen Fall selbsttätig ein, d.h. ändert die Geschwindigkeit und/oder den Lenkwinkel. Durch die erfindungsgemäße Berücksichtigung der Position der Schnittstelle und der Gerätedaten kann demnach beispielsweise erkannt werden, wenn der Schwerpunkt der Arbeitsmaschine 10 einschließlich des Geräts 34 zu hoch ist, um einen vom Bediener über das Lenkrad 78 vorgegebenen Lenkwinkel einzuschlagen, da anderenfalls ein Umfallen der Arbeitsmaschine droht, und in einem derartigen Fall die Arbeitsmaschine 10 abbremsen.

Bei einer anderen Ausführungsform kann die Steuereinrichtung 48 bei einer Straßenfahrt die Geschwindigkeit und/oder den Lenkwinkel selbsttätig kontrollieren, wie bei aus dem Automotive-Bereich bekannten Systemen, welche - auf eine Eingabe durch den Bediener über die Bedienerschnittstelle 70 oder ein anderes Bedienelement hin - die Fahrgeschwindigkeit oder den Abstand zum vorausfahrenden Fahrzeug konstant und auf einen vom Bediener vorgebbaren oder fest einprogrammierten Wert halten und im Fall einer automatischen Lenkung selbsttätig dem Verlauf der Straße folgen. Die Steuereinrichtung 48 berücksichtigt die oben erwähnten Parameter (a) bis (e) und ggf. eine vom Bediener eingegebene, maximale Fahrgeschwindigkeit. Die Steuereinrichtung passt die Geschwindigkeits- oder Abstandsregelung basierend auf der Masse, der Lage des Schwerpunkts und des Anbringungspunktes eines Geräts 34 sowie der Position der Schnittstelle an, an welcher das Gerät 34 an der Arbeitsmaschine 10 angebracht ist. Hierbei ist die Steuereinrichtung 48 vorrangig bestrebt, gefahrenträchtige Situationen zu vermeiden und versucht demgegenüber nachrangig, die Fahrgeschwindigkeit oder den Abstand zum vorausfahrenden Fahrzeug konstant zu halten. Wenn somit in absehbarer Zeit eine Geschwindigkeitsänderung erforderlich werden sollte, z.B. beim Annähern an ein sehr langsames, vorausfahrendes Fahrzeug oder eine enge Kurve, wird die Steuereinrichtung 48 bei hohem Schwerpunkt der Kombination der Kombination aus Arbeitsmaschine 10 und Gerät 34 eher und langsamer verzögern als bei einem niedrigerem Schwerpunkt, um die Fahrstabilität und -sicherheit zu gewährleisten.

Falls das Gerät 34 als Anhänger, Ballenpresse o.ä. ausgeführt und mit Rädern und einer an einer Anhängerkupplung der Arbeitsmaschine 10 angekoppelten Deichsel ausgestattet ist, kann analog vorgegangen werden, wobei jedoch die Berücksichtigung der Position der Schnittstelle entfällt, falls die betreffende Schnittstelle (Anhängerkupplung) nicht gegenüber der Arbeitsmaschine 10 höhenveränderbar ist.

Alternativ oder zusätzlich kann die Steuereinrichtung 48 prüfen, ob die von einem Bediener vorgegebene Geschwindigkeit im Sinne des Fahrerkomforts und/oder des Kraftstoffverbrauchs günstig ist oder nicht und ggf. eine Änderung veranlassen. Auf diese Weise kann erkannt werden, wenn ein Gerät 34 langsamer als derzeit vorgesehen fahren sollte, z.B. zur Verminderung des Kraftstoffverbrauchs oder um bei dem etwa halb gefülltem Tank 46 des in der Figur 1 gezeigten Geräts 34 das Hin- und Herschwappen des Inhalts und die dadurch bewirkten, unkomfortablen Schwankbewegungen der Arbeitsmaschine 10 zu begrenzen.

## Patentansprüche

1. Selbstfahrende landwirtschaftliche Arbeitsmaschine (10) mit einer Anordnung zur Überwachung und/oder Kontrolle des Fahrzustandes der Arbeitsmaschine (10), wobei die Arbeitsmaschine (10) eine positionsveränderbare Schnittstelle (20) zur Anbringung eines Geräts (34) umfasst und die Anordnung mit einer Steuereinrichtung (48) versehen ist, der fahrzeugspezifische Daten hinsichtlich physischer Eigenschaften der Arbeitsmaschine (10), bewegungszustandsspezifische Daten hinsichtlich der Bewegung der Arbeitsmaschine (10) gegenüber ihrer Umgebung, ein Positionssignal hinsichtlich der Position der Schnittstelle (20) und Gerätedaten hinsichtlich physischer Eigenschaften eines an der Schnittstelle (20) angebrachten Geräts (34) zuführbar sind und die Anordnung betreibbar ist, unter Berücksichtigung der der fahrzeugspezifischen Daten, der bewegungszustandsspezifischen Daten, des Positionssignals und der Gerätedaten wenigstens eine Information hinsichtlich des Fahrzustands der Arbeitsmaschine (10) zu evaluieren und anhand des evaluierten Fahrzustands im Sinne der Fahrsicherheit und/oder der Kraftstoffökonomie und/oder des Fahrerkomforts und/oder der Einhaltung einer vorgegebenen Geschwindigkeit und/oder eines vorgegebenen Abstands zu einem vorausfahrenden Fahrzeug optimierte Lenk- und/oder Geschwindigkeitssignale zur manuellen oder automatischen Kontrolle der Arbeitsmaschine (10) auszugeben.

2. Arbeitsmaschine (10) nach Anspruch 1, wobei der Steuereinrichtung (48) Umgebungssignale hinsichtlich der Umgebung der Arbeitsmaschine (10) zuführbar sind und die Steuereinrichtung (48) betreibbar ist, die Information hinsichtlich des Fahrzustandes der Arbeitsmaschine (10) auch anhand der Umgebungssignale zu evaluieren.

3. Arbeitsmaschine (10) nach Anspruch 2, wobei die Umgebungssignale sich auf eines oder mehrere der folgenden Merkmale der Umgebung beziehen: den Abstand eines vorausfahrenden Fahrzeugs, die gemessene oder erwartete Geschwindigkeit eines vorausfahrenden Fahrzeugs, den Abstand eines nachfolgenden oder nebenher fahrenden Fahrzeugs, die gemessene oder erwartete Geschwindigkeit eines nachfolgenden oder nebenher fahrenden Fahrzeugs, die Sichtweite, einen gemessenen oder erwarteten Reibwert des Bodens unter dem Fahrzeug, die Breite einer befahrenen Fahrbahn, die Neigung einer befahrenen Fahrbahn, die geltende Höchstgeschwindigkeit, und den Kurvenradius einer befahrenen Fahrbahn.

4. Arbeitsmaschine (10) nach einem der Ansprüche 1 bis 3, wobei die fahrzeugspezifische Daten sich auf eine oder mehrere der folgenden Merkmale der Arbeitsmaschine (10) beziehen: Abmessungen, Masse, Geometrie der Lenkung, Massenverteilung, Lage des Schwerpunkts, Breite der Reifen, Durchmesser der Reifen, Motorisierung, zulässige Höchstgeschwindigkeit der Arbeitsmaschine (10) mit angebautem Gerät (34), Eigenschaften einer evtl. vorhandenen Federung der Arbeitsmaschine (10) und/oder des Geräts, Ballastierung der Arbeitsmaschine und Eigenschaften von Bremsen der Arbeitsmaschine.

5. Arbeitsmaschine (10) nach einem der Ansprüche 1 bis 4, wobei die bewegungszustandsspezifischen Daten sich auf eine oder mehrere der folgenden Merkmale der Arbeitsmaschine (10) beziehen: aktuelle Geschwindigkeit, aktuelle Beschleunigung, aktueller Lenkwinkel.

6. Arbeitsmaschine (10) nach einem der vorhergehenden Ansprüche, wobei das Positionssignal sich auf die vertikale und/oder seitliche Position der Schnittstelle (20) und/oder die Lage der Schnittstelle (20) an der Arbeitsmaschine (10) und/oder eine physische Eigenschaft der Schnittstelle (20) bezieht.

7. Arbeitsmaschine (10) nach einem der vorhergehenden Ansprüche, wobei die Gerätedaten sich auf eine oder mehrere der folgenden Merkmale des Geräts (34) beziehen: Masse, Abmessungen, Massenverteilung und Lage des Schwerpunkts gegenüber der Schnittstelle.

8. Arbeitsmaschine (10) nach einem der vorhergehenden Ansprüche, wobei die Gerätedaten in einem Speicherelement des Geräts (34) abgelegt und mittels eines Bussystems (94) an die Steuereinrichtung (48) übertragbar oder durch einen Bediener in die Steuereinrichtung eingebbar oder anhand einer Geräteidentifikation von einer beabstandeten Stelle abfragbar oder mittels eines Sensors erfassbar sind.

9. Verfahren zur Überwachung und/oder Kontrolle des Fahrzustandes einer selbstfahrenden landwirtschaftlichen Arbeitsmaschine (10), die eine positionsveränderbare Schnittstelle (20) zur Anbringung eines Geräts (34) umfasst, mit einer Steuereinrichtung (48), der fahrzeugspezifische Daten hinsichtlich physischer Eigenschaften der Arbeitsmaschine (10), bewegungszustandsspezifische Daten hinsichtlich der Bewegung der Arbeitsmaschine (10) gegenüber ihrer Umgebung, ein Positionssignal hinsichtlich der Position der Schnittstelle (20) und Gerätedaten hinsichtlich physischer Eigenschaften eines an der Schnittstelle (20) angebrachten Geräts (34) zugeführt werden und die unter Berücksichtigung der fahrzeugspezifischen Daten, der bewegungszustandsspezifischen Daten, des Positionssignals und der Gerätedaten wenigstens eine Information hinsichtlich des Fahrzustands der Arbeitsmaschine (10) evaluiert und anhand des evaluierten Fahrzustands im Sinne der Fahrsicherheit und/oder der Kraftstoffökonomie und/oder des Fahrerkomforts und/oder der Einhaltung einer vorgegebenen Geschwindigkeit und/oder eines vorgegebenen Abstands zu einem vorausfahrenden Fahrzeug optimierte Lenk- und/oder Geschwindigkeitssignale zur manuellen oder automatischen Kontrolle der Arbeitsmaschine (10) ausgibt.

## Claims

1. Self-propelled agricultural working machine (10) having an arrangement for monitoring and/or controlling the running state of the working machine (10), wherein the working machine (10) comprises an interface (20) which has a variable position and is intended for the attachment of an implement (34), and the arrangement is provided with a control device (48) to which vehicle-specific data relating to physical properties of the working machine (10), movement-state-specific data relating to the movement of the working machine (10) with respect to its surroundings, a position signal relating to the position of the interface (20) and implement data relating to physical properties of a implement (34) which is attached to the interface (20), can be fed, and the arrangement can be operated to evaluate at least one item of information relating to the running state of the working machine (10), while taking into account the vehicle-specific data, the movement-state-specific data, the position signal and the implement data, and to output optimized steering signals and/or speed signals for the manual or automatic control of the working machine (10) on the basis of the evaluated running state in the interest of running safety and/or fuel economy and/or the comfort of the driver and/or compliance with a predefined speed and/or a predefined distance from a vehicle travelling ahead.

2. Working machine (10) according to Claim 1, wherein surroundings signals relating to the surroundings of the working machine (10) can be fed to the control device (48), and the control device (48) can be operated to evaluate the information relating to the running state of the working machine (10) also on the basis of the surrounding signals.

3. working machine (10) according to Claim 2, wherein the surroundings signals relate to one or more of the following features of the surroundings: the distance from a vehicle travelling ahead, the measured or expected speed of a vehicle travelling ahead, the distance from a following vehicle or vehicle travelling alongside, the measured or expected speed of a following vehicle or vehicle travelling alongside, the visibility, a measured or expected coefficient of friction of the ground under the vehicle, the width of a roadway which is being travelled on, the inclination of a road which is being travelled on, the applicable maximum speed and the bend radius of a roadway which is being travelled on.

4. Working machine (10) according to one of Claims 1 to 3, wherein the vehicle-specific data also relate to one or more of the following features of the working machine (10): dimensions, mass, geometry of the steering system, mass distribution, position of the centre of gravity, width of the tyres, diameter of the tyres, motorization, permissible maximum speed of the working machine (10) with attached implement (34), properties that are possibly present suspension system of the working machine (10) and/or the implement, ballasting of the working machine and properties of brakes of the working machine.

5. Working machine (10) according to one of Claims 1 to 4, wherein the movement-state-specific data relate to one or more of the following features of the working machine (10): current speed, current acceleration, current steering angle

6. working machine (10) according to one of the preceding claims, wherein the position signal relates to the vertical and/or lateral position of the interface (20) and/or the position of the interface (20) on the working machine (10) and/or a physical property of the interface (20).

7. Working machine (10) according to one of the preceding claims, wherein the implement data relate to one or more of the following features of the implement (34): mass, dimensions, mass distribution and position of the centre of gravity with respect to the interface.

8. Working machine (10) according to one of the preceding claims, wherein the implement data are stored in a memory element of the implement (34) and can be transmitted to the control device (48) by means of a bus system (94) or can be input into the control device by an operator or can be interrogated from a remote location on the basis of an implement identifier or can be sensed by means of a sensor.

9. Method for monitoring and/or controlling the running state of a self-propelled agricultural working machine (10) which comprises an interface (20) which has a variable position and is intended for the attachment of an implement (34), having a control device (48) to which vehicle-specific data relating to physical properties of the working machine (10), movement-state-specific data relating to the movement of the working machine (10) with respect to its surroundings, a position signal relating to the position of the interface (20) and implement data relating to physical properties of an implement (34) which is attached to the interface (20), can be fed and which evaluates at least one item of information relating to the running state of the working machine (10), while taking into account the vehicle-specific data, the movement-state-specific data, the position signal and the implement data and outputs optimized steering signals and/or speed signals for the manual or automatic control of the working machine (10) on the basis of the evaluated running state in the interest of running safety and/or fuel economy and/or the comfort of the driver and/or compliance with a predefined speed and/or a predefined distance from a vehicle travelling ahead.

## Revendications

1. Machine de travail agricole autopropulsée (10) comprenant un dispositif de surveillance et/ou de vérification de l'état de roulement de la machine de travail (10), la machine de travail (10) comprenant une interface à position variable (20) destinée au montage d'une unité (34) et le dispositif étant pourvu d'un moyen de commande (48) auquel peuvent être amenés des données spécifiques au véhicule concernant les propriétés physiques de la machine de travail (10), des données spécifiques à l'état de déplacement concernant le déplacement de la machine de travail (10) par rapport à son environnement, un signal de position concernant la position de l'interface (20) et des données d'unité concernant les propriétés physiques d'une unité (34) montée sur l'interface (20) et le dispositif pouvant être utilisé pour évaluer au moins une information concernant l'état de roulement de la machine de travail (10) en prenant en compte les données spécifiques au véhicule, les données spécifiques à l'état de déplacement, le signal de position et les données d'unité et pour délivrer, sur la base de l'état de roulement évalué, des signaux de direction et/ou de vitesse optimisés en termes de sécurité de roulement et/ou d'économie de carburant et/ou de confort du conducteur et/ou du respect d'une vitesse prescrite et/ou d'une distance prescrite par rapport à un véhicule précédant afin de commander manuellement ou automatiquement la machine de travail (10).

2. Machine de travail (10) selon la revendication 1, le moyen de commande (48) pouvant être alimenté en signaux environnementaux concernant l'environnement de la machine de travail (10) et le moyen de commande (48) pouvant être utilisé pour évaluer l'information concernant l'état de roulement de la machine de travail (10) également sur la base des signaux environnementaux.

3. Machine de travail (10) selon la revendication 2, les signaux environnementaux concernant au moins une des caractéristiques suivantes de l'environnement : la distance d'un véhicule précédant, la vitesse mesurée ou attendue d'un véhicule précédant, la distance d'un véhicule suivant ou roulant à côté, la vitesse mesurée ou attendue d'un véhicule suivant ou roulant à côté, la distance de visibilité, un coefficient de frottement mesuré ou attendu du sol sous le véhicule, la largeur d'une voie de circulation empruntée, la pente d'une voie de circulation empruntée, la vitesse maximale applicable et le rayon de courbure d'une voie de circulation empruntée.

4. Machine de travail (10) selon l'une des revendications 1 à 3, les données spécifiques au véhicule concernant au moins une des caractéristiques suivantes de la machine de travail (10) : les dimensions, la masse, la géométrie de la direction, la répartition des masses, la position du centre de gravité, la largeur des pneumatiques, le diamètre des pneumatiques, la motorisation, la vitesse maximale admissible de la machine de travail (10) avec l'unité (34) montée, les propriétés d'une suspension éventuellement existante de la machine de travail (10) et/ou de l'unité, le lestage de la machine de travail et les propriétés des freins de la machine de travail.

5. Machine de travail (10) selon l'une des revendication 1 à 4, les données spécifiques à l'état de déplacement concernant au moins une des caractèristiques suivantes de la machine de travail (10) : la vitesse actuelle, l'accélération actuelle, l'angle de braquage actuel.

6. Machine de travail (10) selon l'une des revendications précédentes, le signal de position concernant la position verticale et/ou latérale de l'interface (20) et/ou la position de l'interface (20) sur la machine de travail (10) et/ou une propriété physique de l'interface (20).

7. Machine de travail (10) selon l'une des revendications précédentes, les données d'unité concernant au moins une des caractéristiques suivantes de l'unité (34) : la masse, les dimensions, la répartition des masses et la position du centre de gravité par rapport à l'interface.

8. Machine de travail (10) selon l'une des revendications précédentes, les données d'unité étant stockées dans un élément de mémorisation de l'unité (34) et pouvant être transmises au moyen de commande (48) à l'aide d'un système de bus (94) ou pouvant être entrées dans le moyen de commande par un opérateur ou pouvant être interrogées à partir d'un emplacement distant au moyen d'une identification de l'unité ou pouvant être détectées à l'aide d'un capteur.

9. Procédé de surveillance et/ou de vérification de l'état de roulement d'une machine de travail agricole autopropulsée (10), qui comprend une interface à position variable (20) destinée au montage d'une unité (34), comprenant un moyen de commande (48) auquel sont amenés des données spécifiques au véhicule concernant les propriétés physiques de la machine de travail (10), des données spécifiques à l'état de déplacement concernant le déplacement de la machine de travail (10) par rapport à son environnement, un signal de position concernant la position de l'interface (20) et des données d'unité concernant les propriétés physiques d'une unité (34) montée sur l'interface (20) et qui évalue au moins une information concernant l'état de roulement de la machine de travail (10) en prenant en compte les données spécifiques au véhicule, les données spécifiques à l'état de déplacement, le signal de position et les données d'unité et délivre, sur la base de l'état de roulement évalué, des signaux de direction et/ou de vitesse optimisés en termes de sécurité de roulement et/ou d'économie de carburant et/ou de confort du conducteur et/ou du respect d'une vitesse prescrite et/ou d'une distance prescrite par rapport à un véhicule précédant afin de commander manuellement ou automatiquement la machine de travail (10).
